# EUROPÄISCHE PATENTSCHRIFT

(11) **EP 2 942 142 B1**
(45) Veröffentlichungstag und Bekanntmachung des Hinweises auf die Patenterteilung: **10.07.2019**
(21) Anmeldenummer: 15160632.4
(22) Anmeldetag: 24.03.2015
(51) Int. Cl.: B23K 9/10, H02M 7/42

(54) **VERFAHREN ZUM REGELN EINER SCHWEIßSTROMQUELLE**
METHOD FOR REGULATING A WELDING POWER SOURCE
PROCÉDÉ DE RÉGLAGE D'UNE SOURCE DE COURANT DE SOUDAGE

(30) Priorität: 02.04.2014 DE 102014104639
(43) Veröffentlichungstag der Anmeldung: 11.11.2015
(73) Patentinhaber: Lorch Schweisstechnik GmbH, 71549 Auenwald (DE)
(72) Erfinder: Aigner, Hubert, 4715 Taufkirchen/Tr. (AT)
(74) Vertreter: Hoeger, Stellrecht & Partner Patentanwälte mbB

(56) Entgegenhaltungen:
- WO-A1-97/01211
- AT-B- 412 388
- US-A- 4 935 857

## Beschreibung

Die Erfindung betrifft ein Verfahren zum Regeln einer Schweißstromquelle mit einem Seriell/Parallel-Resonanzkonverter, einer Brückenschaltung und einer Steuereinheit, wobei die Brückenschaltung den Seriell/Parallel-Resonanzkonverter mit Energie versorgt und einen ersten Brückenzweig mit in Reihe zueinander angeordneten ersten und zweiten Schaltelementen und einen parallel zum ersten Brückenzweig geschalteten zweiten Brückenzweig mit in Reihe zueinander angeordneten dritten und vierten Schaltelementen aufweist und die Schaltelemente von der Steuereinheit entsprechend einer in der Steuereinheit hinterlegten Aufeinanderfolge von Schaltzuständen gesteuert werden, die durch eine positive Treibphase, eine erste Freilaufphase, eine negative Treibphase und eine zweite Freilaufphase festgelegt sind, wobei der Beginn einer Treibphase durch ein Umschalten der ersten und zweiten Schaltelemente und das Ende einer Treibphase durch ein Umschalten der dritten und vierten Schaltelemente vorgegeben ist und die Schaltfrequenz der Schaltelemente in einem ersten Steuermodus der Steuereinheit abhängig von der Frequenz des Resonanzkonverterstroms gewählt wird.

Ein derartiges Verfahren ist aus der EP 1 251 991 B1 bekannt.

Lichtbogen-Schweißverfahren, bei denen zwischen einer Schweißelektrode und einem Werkstück ein Lichtbogen brennt, sind in verschiedenen Ausgestaltungen bekannt. Zwischen einer Schweißelektrode und einem Werkstück wird ein Lichtbogen gezündet, der das lichtbogenseitige Ende der Schweißelektrode so stark erhitzt, dass Werkstoff von der Schweißelektrode auf das Werkstück übergeht. Beim Übergang kann sich ein Kurzschluss zwischen der Schweißelektrode und dem Werkstück ausbilden, so dass sich der von der Schweißelektrode zum Werkstück fließende Schweißstrom sehr stark erhöht. Andererseits kann es auch vorkommen, dass der Lichtbogen zwischen der Schweißelektrode und dem Werkstück erlischt, so dass der Schweißstrom den Wert Null annimmt und sich somit zwischen der Schweißelektrode und dem Werkstück ein unendlich großer Widerstand ausbildet. Der Schweißstrom wird als Ausgangsstrom von einer Schweißstromquelle bereitgestellt. Hierzu sind Schweißstromquellen bekannt, die einen Seriell/Parallel-Resonanzkonverter aufweisen, das heißt einen Stromwandler, der zur Energieübertragung mit einem seriellen Schwingkreis und einem parallelen Schwingkreis arbeitet. Der serielle Schwingkreis wird von einer Brückenschaltung mit einer variablen Wechselspannung versorgt. Eine Steuereinheit steuert die Brückenschaltung in Abhängigkeit von mindestens einer Ausgangsgröße der Schweißstromquelle, also beispielsweise in Abhängigkeit von deren Ausgangsstrom oder Ausgangsspannung.

Aus der Veröffentlichung EP 1 251 991 B1 ist eine Schweißstromquelle der eingangs genannten Art bekannt. Bei dieser Schweißstromquelle ist die Brückenschaltung als Vollbrücke ausgebildet und weist einen ersten Brückenzweig und einen parallel zum ersten Brückenzweig geschalteten zweiten Brückenzweig aus. Im ersten Brückenzweig sind ein erstes und ein zweites Schaltelement in Reihe zueinander angeordnet und im zweiten Brückenzweig sind ein drittes und ein viertes Schaltelement in Reihe zueinander angeordnet. In jedem Brückenzweig werden die Schaltelemente von der Steuereinheit derart angesteuert, dass eines der beiden Schaltelemente aktiviert und das andere Schaltelement deaktiviert ist. Die Schaltelemente jedes Brückenzweigs werden also wechselweise aktiviert. Je nachdem, welche Schaltelemente aktiviert und welche Schaltelemente deaktiviert sind, werden insgesamt vier Schaltzustände gebildet. Die Schaltzustände werden bei gleichbleibenden Lastverhältnissen der Schweißstromquelle in einer festgelegten Reihenfolge durchlaufen. Die Reihenfolge ist in der Steuereinheit hinterlegt, und zwar durchlaufen die Schaltzustände nacheinander eine positive Treibphase, eine erste Freilaufphase, eine negative Treibphase und eine zweite Freilaufphase. Die Brückenschaltung ist an eine Gleichspannungsquelle angeschlossen und in den Treibphasen bildet sich ein Stromfluss aus von der Gleichspannungsquelle über die Brückenschaltung zum Resonanzkonverter, so dass der Resonanzkonverter mit Energie versorgt wird. In der positiven Treibphase liegt am Ausgang der Brückenschaltung eine positive Spannung an, und in der negativen Treibphase liegt am Ausgang der Brückenschaltung eine negative Spannung an. Bei gleichbleibenden Lastverhältnissen der Schweißstromquelle folgt den Treibphasen jeweils eine Freilaufphase. In den Freilaufphasen wird der Resonanzkonverter nicht mit Energie aus der Gleichspannungsquelle versorgt, es wird aber ein Stromfluss im Resonanzkonverter aufrechterhalten. Zu diesem Zweck werden die Schaltelemente der Brückenschaltung in den Freilaufphasen derart angesteuert, dass an den Eingängen des Resonanzkonverters ein gemeinsames Potential anliegt. Die Steuerung basiert somit auf dem Grundprinzip einer selbsttragenden Schwingung.

Der Beginn einer Treibphase wird durch ein Umschalten des ersten und zweiten Schaltelementes, also der Schaltelemente des ersten Brückenzweigs, vorgegeben, und das Ende einer Treibphase wird durch ein Umschalten des dritten und vierten Schaltelements, also der Schaltelemente des zweiten Brückenzweigs, vorgegeben. Das Umschalten der dritten und vierten Schaltelemente erfolgt phasenverschoben zum Umschalten der ersten und zweiten Schaltelemente, und zwar erfolgt das Umschalten der dritten und vierten Schaltelemente mit einer von der Steuereinheit vorgebbaren Phasenverschiebung, die einem gewünschten Sollwert einer Ausgangsgröße der Schweißstromquelle entspricht, also beispielsweise einem vorgebbaren Sollwert des Ausgangsstroms. Durch das phasenverschobene Umschalten der dritten und vierten Schaltelemente kann die Dauer einer Treibphase und damit die Dauer der Energiezufuhr für den Resonanzkonverter vorgegeben werden. Die Schaltfrequenz der Schaltelemente wird in Abhängigkeit von der Frequenz des im seriellen Schwingkreis des Resonanzkonverters fließenden Stroms gewählt. Der im seriellen Schwingkreis fließende Strom wird nachfolgend als "Resonanzkonverterstrom" oder "Primärstrom" bezeichnet. Dessen Frequenz hängt ab von den Induktivitäten und Kapazitäten des Resonanzkonverters und insbesondere auch vom Lastwiderstand der Schweißstromquelle, das heißt vom Widerstand zwischen der Schweißelektrode und dem zu schweißenden Werkstück.

Der Resonanzkonverter wird in einem Frequenzbereich oberhalb der lastabhängigen Resonanzfrequenz betrieben. Wie im Einzelnen in der Veröffentlichung EP 1 251 991 B1 beschrieben ist, verringert sich in diesem Frequenzbereich die Übertragungsfunktion des Resonanzkonverters mit zunehmender Frequenz. Bei abnehmender Last wird daher eine höhere Frequenz gewählt, und da die Schaltfrequenz der Schaltelemente der Brückenschaltung abhängig ist von der Frequenz des Resonanzkonverterstroms nimmt die Schaltfrequenz bei sehr geringen Lasten sehr hohe Werte an. Dies hat den Nachteil, dass die Schaltverluste in den Schaltelementen deutlich ansteigen.

Ein weiterer Nachteil ergibt sich bei dem bekannten Verfahren aus dem Umstand, dass die Steuereinheit in der Lage sein muss, die Phasenlage des Resonanzkonverterstroms und insbesondere dessen Nulldurchgänge eindeutig zu detektieren, um die Schaltfrequenz der Schaltelemente in Abhängigkeit von der Frequenz des Resonanzkonverterstroms wählen zu können. Der Resonanzkonverterstrom darf daher einen Minimalwert nicht unterschreiten. Dies bedingt auch einen Minimalwert für den Ausgangsstrom der Schweißstromquelle, der nicht unterschritten werden kann. Der Stellbereich für den Ausgangsstrom der Schweißstromquelle ist daher bei dem bekannten Verfahren zu kleinen Werten hin beschränkt. Andererseits soll die Schweißstromquelle in aller Regel auch einen hohen Ausgangsstrom bereitstellen können, um bei Bedarf an einen Schweißprozess eine hohe elektrische Energie liefern zu können.

Aufgabe der vorliegenden Erfindung ist es daher, ein Verfahren der eingangs genannten Art derart weiterzubilden, dass ohne große Schaltverluste sowohl sehr große als auch sehr kleine Ausgangsströme bereitgestellt werden können.

Diese Aufgabe wird bei einem Verfahren der gattungsgemäßen Art erfindungsgemäß dadurch gelöst, dass die Schaltfrequenz der Schaltelemente in einem zweiten Steuermodus der Steuereinheit verglichen mit der Schaltfrequenz des ersten Steuermodus um einen ganzzahligen Faktor reduziert wird und dass die Steuereinheit wahlweise im ersten Steuermodus oder im zweiten Steuermodus betrieben wird.

Das erfindungsgemäße Verfahren erlaubt es, die Steuereinheit wahlweise in einem ersten Steuermodus oder in einem zweiten Steuermodus zu betreiben. Der erste Steuermodus kann auch als Normalbetrieb bezeichnet werden. In diesem Steuermodus ist die Schaltfrequenz der Schaltelemente aus der Zeitdifferenz zwischen zwei unmittelbar aufeinanderfolgenden Nulldurchgängen des Resonanzkonverterstroms abgeleitet. Bei gleichbleibenden Lastverhältnissen durchlaufen die Schaltelemente der Brückenschaltung während einer Periode des Resonanzkonverterstroms aufeinanderfolgend die voranstehend bereits erläuterten Schaltzustände in Form einer positiven Treibphase, einer ersten Freilaufphase, einer negativen Treibphase und einer zweiten Freilaufphase. Die Dauer der Treibphasen erfolgt in Abhängigkeit von der Phasenverschiebung zwischen den Umschaltvorgängen der Schaltelemente der beiden Brückenzweige. Das erfindungsgemäße Verfahren weist nun einen zweiten Steuermodus auf. In diesem zweiten Steuermodus ist die Schaltfrequenz der Schaltelemente der Brückenschaltung verglichen mit der Schaltfrequenz, die im ersten Steuermodus vorliegt, um einen ganzzahligen Faktor reduziert. Die Schaltfrequenz im zweiten Steuermodus kann zum Beispiel die Hälfte, ein Drittel oder ein Viertel der Schaltfrequenz des ersten Steuermodus betragen. Die verringerte Schaltfrequenz hat zur Folge, dass die Freilaufphasen verlängert werden, das heißt es werden die Schaltzustände verlängert, innerhalb derer der Resonanzkonverter nicht mit Energie aus der Gleichspannungsquelle versorgt wird. Eine Energiezufuhr erfolgt weiterhin nur in den Treibphasen. Da im zweiten Steuermodus die Phasenverschiebung zwischen den Umschaltvorgängen der Schaltelemente der beiden Brückenzweige beibehalten wird, ist die Dauer der Treibphasen im zweiten Steuermodus gleich lang wie im ersten Steuermodus, lediglich die Freilaufphasen werden verlängert. Dies hat zur Folge, dass das Verhältnis der Dauer der Treibphasen zur Dauer der Freilaufphasen zu kleineren Werten hin reduziert wird, ohne dass damit die Treibphasen in extrem kleinen Zeitabschnitten realisiert werden müssen. Das kleinere Verhältnis der Dauer der Treibphase zur Dauer der Freilaufphase wird beim erfindungsgemäßen Verfahren durch eine Verlängerung der Freilaufphase erreicht, und dies wiederum wird durch eine Reduzierung der Schaltfrequenz der Schaltelemente der Brückenschaltung um einen ganzzahligen Faktor verglichen mit der im ersten Steuermodus herrschenden Schaltfrequenz erzielt.

Mit dem erfindungsgemäßen Verfahren können im zweiten Steuermodus sehr geringe Ausgangsströme erzielt werden, ohne dass die Schaltelemente einer hohen Belastung unterworfen werden und die Schaltverluste ansteigen.

Die Steuerung der Schweißstromquelle erfolgt beim erfindungsgemäßen Verfahren durch ein frequenzvariables Pulsbreitenmodulationsverfahren, bei welchem die Regelung des Schweißstroms durch eine kombinierte Variation der Pulsbreite und der Schaltfrequenz erreicht wird. Die Pulsbreite wird durch die Phasenverschiebung zwischen den Umschaltvorgängen der Schaltelemente der beiden Brückenzweige erzielt und die Variation der Frequenz erfolgt oberhalb der Resonanzfrequenz des Resonanzkonverters. Der Resonanzkonverter wird somit im überresonanten Modus betrieben, obwohl die effektive Schaltfrequenz der Schaltelemente im zweiten Steuermodus kleiner ist als die Frequenz des Resonanzkonverterstroms. Die Schaltelemente werden im zweiten Steuermodus mit einer Frequenz gesteuert, die einem ganzzahligen Bruchteil der Frequenz des Resonanzkonverterstroms entspricht, wobei die Schaltelemente jedoch synchron zum Resonanzkonverterstrom geschaltet werden. Dadurch bleibt auch im zweiten Steuermodus das Grundprinzip der selbsttragenden Schwingung bestehen, das heißt die Schwingung des Resonanzkonverterstroms bleibt in den Freilaufphasen erhalten und in den Treibphasen wird der Resonanzkonverter mit Energie aus der Gleichspannungsquelle versorgt.

Entsprechend dem ersten Steuermodus erfolgt auch im zweiten Steuermodus eine kontinuierliche Abfolge einer positiven Treibphase, einer ersten Freilaufphase, einer negativen Treibphase und einer zweiten Freilaufphase. Die positive Treibphase zeichnet sich durch eine positive Eingangsspannung des Resonanzkonverters aus und die negative Treibphase zeichnet sich durch eine negative Eingangsspannung des Resonanzkonverters aus. Aufgrund der im zweiten Steuermodus reduzierten Schaltfrequenz weisen die Freilaufphasen Abschnitte mit positivem Resonanzkonverterstrom und Abschnitte mit negativem Resonanzkonverterstrom auf. Ist beispielsweise die Schaltfrequenz im zweiten Steuermodus um den Faktor 3 reduziert bezogen auf die Schaltfrequenz im ersten Steuermodus, so weist die auf die positive Treibphase folgende erste Freilaufphase einen ersten Abschnitt mit positivem Resonanzkonverterstrom, einen zweiten Abschnitt mit negativem Resonanzkonverstrom und einen dritten Abschnitt mit positivem Resonanzkonverterstrom auf. Die der negativen Treibphase folgende zweite Freilaufphase weist in diesem Falle einen ersten Abschnitt mit negativem Resonanzkonverterstrom, einen zweiten Abschnitt mit positivem Resonanzkonverterstrom und einen dritten Abschnitt mit negativem Resonanzkonverterstrom auf. An die zweite Freilaufphase folgt wieder eine positive Treibphase.

Die Wahl des Steuermodus erfolgt bei einer bevorzugten Ausgestaltung des erfindungsgemäßen Verfahrens in Abhängigkeit von der Größe des Sollwerts des Ausgangsstroms der Schweißstromquelle. Der Benutzer hat die Möglichkeit, der Steuereinheit einen Sollwert des Ausgangsstroms vorzugeben, und die Steuereinheit wählt abhängig vom Sollwert entweder den ersten Steuermodus oder den zweiten Steuermodus zur Steuerung der Schaltelemente der Brückenschaltung. Für große Ausgangsströme wählt die Steuereinheit günstigerweise den ersten Steuermodus und für kleine Ausgangsströme wählt die Steuereinheit günstigerweise den zweiten Steuermodus.

Bevorzugt geht die Steuereinheit in den zweiten Steuermodus über, wenn der Sollwert des Ausgangsstroms einen vorgegebenen oder vorgebbaren Grenzwert unterschreitet. Der Grenzwert kann beispielsweise maximal 50A betragen, insbesondere 40A. Der Grenzwert ist grundsätzlich frei wählbar. Er hängt auch von der Dimensionierung der Schweißstromquelle ab.

Es kann auch vorgesehen sein, dass die Steuereinheit den Steuermodus in Abhängigkeit von einem Steuerbefehl des Benutzers wählt. Der Benutzer hat somit die Möglichkeit, der Steuereinheit den ersten oder den zweiten Steuermodus vorzugeben.

Bei einer vorteilhaften Ausgestaltung des erfindungsgemäßen Verfahrens wird die Schaltfrequenz der Schaltelemente im zweiten Steuermodus verglichen mit der Schaltfrequenz im ersten Steuermodus um einen ungeradzahligen Faktor reduziert. Ein ungeradzahliger Faktor ist von Vorteil, so dass eine positive Treibphase bei einem Wechsel von einem negativen Resonanzkonverterstrom zu einem positiven Resonanzkonverterstrom erfolgt und eine negative Treibphase bei einem Wechsel von einem positiven Resonanzkonverterstrom zu einem negativen Resonanzkonverterstrom erfolgt.

Von besonderem Vorteil ist es, wenn die Schaltfrequenz der Schaltelemente der Brückenschaltung im zweiten Steuermodus um den Faktor 3, 5 oder 7 bezogen auf die Schaltfrequenz der Schaltelemente der Brückenschaltung im ersten Steuermodus reduziert wird. Insbesondere eine Reduktion um den Faktor 3 hat sich als vorteilhaft erwiesen.

Die Schaltfrequenz der Schaltelemente wird weder im ersten Steuermodus noch im zweiten Steuermodus starr durch die Steuereinheit vorgegeben, sondern sie ergibt sich in Abhängigkeit vom gewünschten Sollwert der Ausgangsgröße der Schweißstromquelle und in Abhängigkeit von den herrschenden Lastbedingungen und den frequenzbestimmenden Induktivitäten und Kapazitäten des Resonanzkonverters.

Bei besonders geringen Lastströmen könnte grundsätzlich die Schwingung des Resonanzkonverterstroms im zweiten Steuermodus während einer sehr langen Freilaufphase zum Erliegen kommen. Bei einer besonders vorteilhaften Ausgestaltung des erfindungsgemäßen Verfahrens ist vorgesehen, dass die Steuereinheit den Schaltzustand einer Freilaufphase nach Ablauf einer vorgebbaren maximalen Zeitdauer durch Übergang in die gemäß der vorgegebenen Reihenfolge von Schaltzuständen der Freilaufphase nachfolgende Treibphase beendet. Es kann somit der Steuereinheit eine maximale Zeitdauer einer Freilaufphase vorgegeben werden. Nach Ablauf der vorgegeben Zeitdauer wird die erste oder zweite Freilaufphase durch ein Umschalten in die darauf folgende, durch die Steuereinheit vorgegebene Treibphase beendet. Dadurch wird erreicht, dass eine definierte minimale Schaltfrequenz nicht unterschritten wird. Die während der Freilaufphase eventuell zum Erliegen gekommene Schwingung des Resonanzkonverterstroms wird durch die der Freilaufphase folgende, von der Steuereinheit nach Ablauf der maximalen Zeitdauer aktivierte Treibphase wieder in Gang gesetzt.

Der Übergang vom ersten Steuermodus in den zweiten Steuermodus erfolgt vorteilhafterweise nach Ablauf einer Treibphase. Somit vollzieht die Steuereinheit den Übergang vom ersten Steuermodus in den zweiten Steuermodus nach Ablauf der positiven Treibphase oder nach Ablauf der negativen Treibphase. An diese Treibphasen schließen sich dann Freilaufphasen an, deren Dauer durch die im zweiten Steuermodus reduzierte Schaltfrequenz der Schaltelemente vorgegeben ist.

Der Übergang vom zweiten Steuermodus in den ersten Steuermodus erfolgt günstigerweise nach Ablauf einer Freilaufphase. So kann vorgesehen sein, dass die Steuereinheit nach Ablauf der ersten Freilaufphase aus dem zweiten Steuermodus in die negative Treibphase des ersten Steuermodus übergeht. Der Übergang vom zweiten in den ersten Steuermodus kann auch nach Ablauf der zweiten Freilaufphase erfolgen, wobei dann ein Übergang in die positive Treibphase des ersten Steuermodus erfolgt.

Die nachfolgende Beschreibung einer bevorzugten Ausführungsform der Erfindung dient im Zusammenhang mit der Zeichnung der näheren Erläuterung. Es zeigen:
- Figur 1:: ein Blockschaltbild einer Schweißstromquelle;
- Figur 2:: ein Schaltschema der Schaltelemente einer Brückenschaltung der Schweißstromquelle aus Figur 1 sowie der zeitliche Verlauf eines Resonanzkonverterstroms und einer Ausgangsspannung der Brückenschaltung in einem ersten Steuermodus;
- Figur 3:: ein Schaltschema der Schaltelemente einer Brückenschaltung der Schweißstromquelle aus Figur 1 sowie der zeitliche Verlauf eines Resonanzkonverterstroms und einer Ausgangsspannung der Brückenschaltung beim Übergang aus dem ersten Steuermodus in einen zweiten Steuermodus, und
- Figur 4:: ein Schaltschema der Schaltelemente einer Brückenschaltung der Schweißstromquelle aus Figur 1 sowie der zeitliche Verlauf eines Resonanzkonverterstroms und der Ausgangsspannung der Brückenschaltung beim Übergang aus dem zweiten Steuermodus in den ersten Steuermodus.

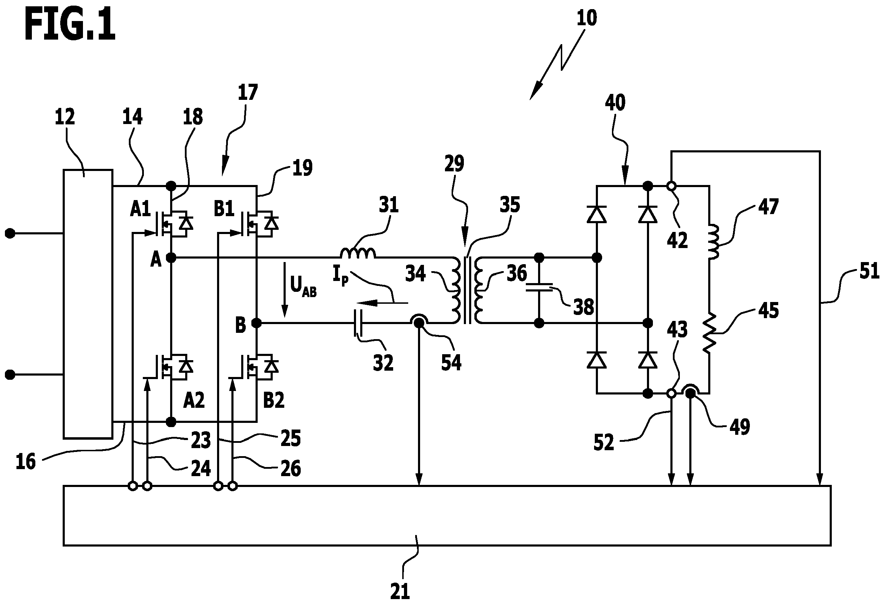

In Figur 1 ist schematisch ein vereinfachtes Blockschaltbild einer Schweißstromquelle dargestellt, die insgesamt mit dem Bezugszeichen 10 belegt ist. Sie umfasst einen eingangsseitigen Gleichrichter 12, der in üblicher und aus der Zeichnung nicht ersichtlicher Weise an ein Spannungsversorgungsnetz, insbesondere an ein öffentliches Spannungsversorgungsnetz, beispielsweise an ein Wechselspannungsnetz mit 230 V oder 400 V angeschlossen werden kann. Im eingangsseitigen Gleichrichter 12 wird die vom Spannungsversorgungsnetz bereitgestellte Wechselspannung gleichgerichtet.

Der eingangsseitige Gleichrichter 12 ist über eine erste Verbindungsleitung 14 und eine zweite Verbindungsleitung 15 mit einer Brückenschaltung 17 verbunden. Die Brückenschaltung 17 ist als Vollbrücke ausgebildet und weist einen ersten Brückenzweig 18 und einen parallel zum ersten Brückenzweig 18 geschalteten zweiten Brückenzweig 19 auf. Im ersten Brückenzweig 18 sind ein erstes Schaltelement A1 und ein zweites Schaltelement A2 in Reihe zueinander angeordnet. In entsprechender Weise sind im zweiten Brückenzweig 19 ein drittes Schaltelement B1 und ein viertes Schaltelement B2 in Reihe zueinander angeordnet. Die Schaltelemente sind im dargestellten Ausführungsbeispiel als MOSFET-Transistoren ausgestaltet und weisen jeweils eine antiparallel geschaltete Freilaufdiode auf.

Die Steuerung der Brückenschaltung 17 erfolgt mittels einer Steuereinheit 21, die die Schaltelemente entsprechend dem nachfolgend näher erläuterten Verfahren über Steuerleitungen 23, 24, 25 und 26 ansteuert, so dass die Brückenschaltung 17 an Knotenpunkten A und B eine Ausgangsspannung U_{AB} bereitstellt in Form einer Wechselspannung mit variabler Frequenz und variabler Pulsbreite.

Die von der Brückenschaltung 17 dem Resonanzkonverter 29 bereitgestellte Spannung U_{AB} wird an einem zwischen dem ersten Schaltelement A1 und dem zweiten Schaltelement A2 im ersten Brückenzweig 18 angeordneten Knotenpunkt A und einem zwischen dem dritten Schaltelement B1 und dem vierten Schaltelement B2 im zweiten Brückenzweig 19 angeordneten Knotenpunkt B abgegriffen.

Der Brückenschaltung 17 nachgeordnet ist ein Seriell/Parallel-Resonanzkonverter 29 mit einem seriellen Schwingkreis, der von einer seriellen Induktivität 31, einer in Reihe geschalteten seriellen Kapazität 32 und einer in Reihe geschalteten Primärspule 34 eines Spannungswandlers in Form eines Transformators 35 gebildet wird. Parallel zur Sekundärspule 36 des Transformators 35 ist eine parallele Kapazität 38 geschaltet, die in Kombination mit der Sekundärspule 36 einen parallelen Schwingkreis ausbildet.

An die parallele Kapazität 38 schließt sich ein ausgangsseitiger Gleichrichter 40 an, der die vom Transformator 35 über die parallele Kapazität 38 bereitgestellte Wechselspannung gleichrichtet und dessen Ausgangsspannung an den Ausgangsklemmen 42, 43 der Schweißstromquelle 10 anliegt.

Über die Ausgangsklemmen 42, 43 kann in üblicher Weise ein Schweißprozess mit Energie versorgt werden. Der Schweißprozess ist in der schematischen Darstellung gemäß Figur 1 durch einen Lichtbogenwiderstand 45 dargestellt, der in Reihe geschaltet ist zu einer Leitungsinduktivität 47. Der Lichtbogenwiderstand 45 stellt den Widerstand des Lichtbogens dar, der zwischen einer Schweißelektrode und dem zu schweißenden Werkstück zündet. Er unterliegt starken dynamischen Änderungen, denn beim Werkstoffübergang von der Schweißelektrode zu dem zu schweißenden Werkstück kann es kurzzeitig zur Ausbildung eines Kurzschlusses kommen, so dass der Lichtbogenwiderstand 45 sehr gering ist und der über den Lichtbogenwiderstand fließende Schweißstrom einen hohen Wert annimmt. Es kann allerdings auch vorkommen, dass der Lichtbogen erlischt und daher der Lichtbogenwiderstand 45 einen sehr großen Wert annimmt, wohingegen der Schweißstrom sehr gering ist. Die Schweißstromquelle 10 unterliegt somit während des Schweißprozesses hochdynamischen Laständerungen.

Der Schweißstrom, das heißt der Ausgangsstrom der Schweißstromquelle 10 wird von einem ersten Stromaufnehmer 49 erfasst und der Steuereinheit 21 wird vom ersten Stromaufnehmer 49 ein Istwert des Ausgangsstroms bereitgestellt. Über Messleitungen 51 und 52, die an die Ausgangsklemmen 42, 43 angeschlossen sind, wird der Steuereinheit 21 außerdem ein Istwert der Ausgangsspannung der Schweißstromquelle 10 bereitgestellt. Der Benutzer hat die Möglichkeit, der Steuereinheit 21 einen Sollwert des Ausgangsstroms vorzugeben.

Ein zweiter Stromaufnehmer 54 erfasst den im seriellen Schwingkreis des Resonanzkonverters 29 fließenden Primärstrom I_{P}, dessen Wert ebenfalls der Steuereinheit 21 bereitgestellt wird.

Die Steuereinheit 21 steuert die Schweißstromquelle 10 mit einem frequenzvariablen Pulsbreitenmodulationsverfahren, bei welchem die Steuerung des Schweißstroms durch die kombinierte Variation der Pulsbreite und der Schaltfrequenz der Ausgangsspannung U_{AB} der Brückenschaltung 17 erfolgt. Hierzu werden die Schaltelemente A1, A2, B1 und B2 von der Steuereinheit 21 abwechselnd aktiviert und deaktiviert mittels Steuersignale α und ϕ, die auch als Phasenwinkel bezeichnet werden können, da das Steuersignal α den Umschaltzeitpunkt der Schaltelemente A1 und A2 und das Steuersignal ϕ den Umschaltzeitpunkt der Schaltelemente B1 und B2 relativ zum Nulldurchgang des Primärstroms I_{P} vorgibt.

Die Steuereinheit 21 weist einen ersten Steuermodus und einen zweiten Steuermodus auf. Der erste Steuermodus kann auch als Normalbetrieb bezeichnet werden und der zweite Steuermodus kann als Minimumstrombetrieb bezeichnet werden, da im zweiten Steuermodus mit geringen Schaltverlusten auch sehr kleine Schweißströme bereitgestellt werden können.

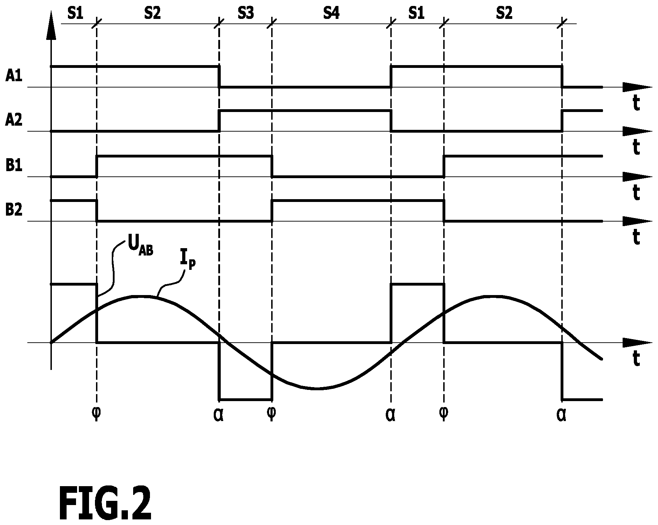

Figur 2 zeigt schematisch ein Schaltschema der Schaltelemente A1, A2, B1 und B2 sowie den zeitlichen Verlauf des Primärstroms I_{P} und der Ausgangsspannung U_{AB} der Brückenschaltung im ersten Steuermodus der Schweißstromquelle 10. Die Schaltelemente A1 und A2 des ersten Brückenzweigs 18 werden wechselweise aktiviert und deaktiviert, wobei der Umschaltvorgang im dargestellten Ausführungsbeispiel jeweils unmittelbar vor einem Nulldurchgang des Primärstroms I_{P} erfolgt. In entsprechender Weise werden die Schaltelemente B1 und B2 des zweiten Brückenzweigs 19 wechselweise aktiviert und deaktiviert, wobei der Umschaltvorgang bei einem Nulldurchgang der Ausgangsspannung U_{AB} erfolgt. Die Schaltungsverluste der als Leistungshalbleiter ausgebildeten Schaltelemente A1, A2, B1 und B2 können daher sehr gering gehalten werden. Das Umschalten der Schaltelemente erfolgt in der Praxis unter Beachtung einer in den Figuren nicht dargestellten, dem Fachmann an sich bekannten Totzeit zwischen dem Deaktivieren eines Schaltelements und dem anschließenden Aktivieren eines anderen Schaltelements. Bei Verwendung von MOSFET-Schaltelementen beträgt die Totzeit typischerweise etwa 100 ns. Dadurch wird ein Brückenkurzschluss vermieden, der zu einer Zerstörung der Schaltelemente führen könnte.

Durch die phasenverschobene Umschaltung der Schaltelemente der beiden Brückenzweige 18, 19 bildet die Ausgangsspannung U_{AB} in zeitlichen Abständen, die durch die Nulldurchgänge des Primärstroms I_{P} vorgegeben sind, positive und negative Spannungspulse. Ein positiver Spanungspuls erfolgt während einer positiven Treibphase, in der die Schaltelemente A1 und B2 aktiviert und die Schaltelemente A2 und B1 deaktiviert sind. In dieser Phase ist der Resonanzkonverter 29 über die erste Verbindungsleitung 14 und die zweite Verbindungsleitung 16 mit den Ausgängen des eingangsseitigen Gleichrichters 12 verbunden. An die positive Treibphase S1 schließt sich eine erste Freilaufphase S2 an, in der das erste Schaltelement A1 und das dritte Schaltelement B1 aktiviert und das zweite Schaltelement A2 und das vierte Schaltelement B2 deaktiviert sind. In der ersten Freilaufphase wird die Schwingung des Primärstroms I_{P} über das erste Schaltelement A1 und die Freilaufdiode des dritten Schaltelements B1 aufrechterhalten, der Resonanzkonverter 29 wird aber vom eingangsseitigen Gleichrichter 12 nicht mit Energie versorgt. Es wird jedoch ebenso wie in der positiven Treibphase S1 auch in der ersten Freilaufphase S2 vom Resonanzkonverter 29 Energie an den Schweißprozess abgegeben.

An die erste Freilaufphase schließt sich eine negative Treibphase S3 an, in der das zweite Schaltelement A2 und das dritte Schaltelement B1 aktiviert und das erste Schaltelement A1 sowie das vierte Schaltelement B2 deaktiviert sind. In diesem Zustand wird der Resonanzkonverter 29 vom eingangsseitigen Gleichrichter 12 ebenfalls mit Energie versorgt, wobei allerdings die Ausgangsspannung U_{AB} der Brückenschaltung 17 einen negativen Wert annimmt.

An die negative Treibphase schließt sich eine zweite Freilaufphase S4 an, in der das zweite Schaltelement A2 und das vierte Schaltelement B2 aktiviert und das erste Schaltelement A1 sowie das dritte Schaltelement B1 deaktiviert sind. In dieser Phase wird die Schwingung des Primärstroms I_{P} über das zweite Schaltelement A2 und über die Freilaufdiode des vierten Schaltelements B2 aufrechterhalten, ohne dass Energie in den Resonanzkonverter 29 eingebracht wird. Es wird jedoch wie in der negativen Treibphase S3 auch in der zweiten Freilaufphase S4 vom Resonanzkonverter 29 Energie an den Schweißprozess abgegeben.

Das Verhältnis der Länge der Treibphasen zur Länge der Freilaufphasen bestimmt die Menge an Energie, die in den Resonanzkonverter 29 eingebracht und von diesem dem Schweißprozess zur Verfügung gestellt wird. Falls nur sehr wenig Energie eingebracht werden soll, dann müssen die Treibphasen sehr kurz gehalten werden. Da der Resonanzkonverter 29 oberhalb seiner Resonanzfrequenz betrieben wird, ist es im ersten Steuermodus erforderlich, die Frequenz des Resonanzkonverterstroms zu erhöhen, um kleine Ausgangsströme zu erzielen. Dies kann zu hohen Schaltungsverlusten führen.

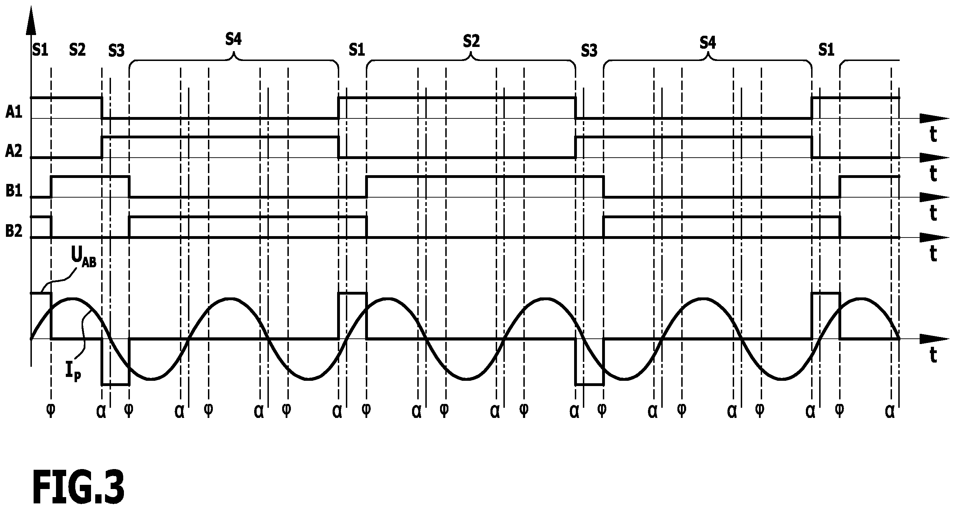

Zur Bereitstellung geringer Schweißströme weist daher die Schweißstromquelle 10 erfindungsgemäß einen zweiten Steuermodus auf, bei dem die Schaltfrequenz der Schaltelemente A1, A2, B1 und B2 um einen ganzzahligen Faktor, insbesondere einen ungeradzahligen Faktor reduziert wird verglichen mit der Schaltfrequenz des ersten Steuermodus. In Figur 3 ist ein Schaltschema der Schaltelemente A1, A2, B1 und B2 beim Übergang vom ersten Steuermodus in den zweiten Steuermodus dargestellt. Hierbei durchlaufen die Schaltelemente zunächst noch eine positive Treibphase S1, eine erste Freilaufphase S2 und eine negative Treibphase S3 im ersten Steuermodus, wie dies voranstehend unter Bezugnahme auf Figur 2 bereits im Einzelnen erläutert wurde. Nach Abschluss der negativen Treibphase S3 erfolgt ein Übergang in den zweiten Steuermodus, wobei im dargestellten Ausführungsbeispiel die Schaltfrequenz der Schaltelemente A1, A2, B1 und B2 im zweiten Steuermodus um den Faktor 3 reduziert ist. An die negative Treibphase S3 schließt sich daher im dargestellten Ausführungsbeispiel eine zweite Freilaufphase S4 an, die in drei aufeinanderfolgende Abschnitte unterteilt werden kann. Während eines ersten Abschnitts der zweiten Freilaufphase S4 nimmt der Primärstrom I_{P} im zweiten Steuermodus negative Werte an. An diesen ersten Abschnitt schließt sich ein zweiter Abschnitt der zweiten Freilaufphase S4 mit positivem Strom I_{P} an, und an diesen zweiten Abschnitt schließt sich im zweiten Steuermodus ein dritter Abschnitt der zweiten Freilaufphase S4 mit negativem Primärstrom I_{P} an. Die zweite Freilaufphase S4 ist somit im zweiten Steuermodus deutlich länger als im ersten Steuermodus. An die zweite Freilaufphase S4 schließt sich auch im zweiten Steuermodus eine positive Treibphase S1 an, deren Länge durch die Phasenwinkel α und ϕ vorgegeben ist. Die positiven Treibphasen S1 und die negativen Treibphasen S3 sind im zweiten Steuermodus gleich lang wie im ersten Steuermodus.

An die positive Treibphase S1 schließt sich im zweiten Steuermodus eine erste Freilaufphase S2 an mit verlängerter Dauer. Die erste Freilaufphase S2 weist im dargestellten Ausführungsbeispiel einen ersten Abschnitt mit positivem Primärstrom I_{P}, einen darauf folgenden zweiten Abschnitt mit negativem Strom I_{P} und einen darauf folgenden dritten Abschnitt mit positivem Strom I_{P} auf. An die zweite Freilaufphase S2 schließt sich auch im zweiten Steuermodus eine negative Treibphase S3 an, deren Dauer wiederum durch die Phasenwinkel α und ϕ vorgegeben ist. Der negativen Treibphase S3 folgt dann erneut eine zweite Freilaufphase S4.

Die Aufeinanderfolge der Schaltzustände S1, S2, S3 und S4 wird somit auch im zweiten Steuermodus aufrechterhalten, allerdings sind die Freilaufphasen S2 und S4 im zweiten Steuermodus deutlich länger als im ersten Steuermodus. Dies hat zur Folge, dass im zweiten Steuermodus weniger Energie in den Resonanzkonverter 29 eingebracht wird, so dass mit geringen Schaltverlusten deutlich kleinere Schweißströme bereitgestellt werden können.

Wird im zweiten Steuermodus durch eine entsprechende Reduzierung der Schaltfrequenz der Schaltelemente A1, A2, B1 und B2 die Dauer der Freilaufphasen stark verlängert, so kann dies zur Folge haben, dass die Schwingung des Primärstroms I_{P} in einer Freilaufphase zum Erliegen kommt. Auf diesen Fall reagiert die Steuereinheit 21 derart, dass die erste bzw. zweite Freilaufphase nach einer vorgebbaren Zeitdauer durch ein Umschalten in die darauf folgende, durch die Steuereinheit 21 vorgegebene Treibphase beendet wird. Dadurch wird erreicht, dass eine vorgegebene minimale Schaltfrequenz nicht unterschritten wird.

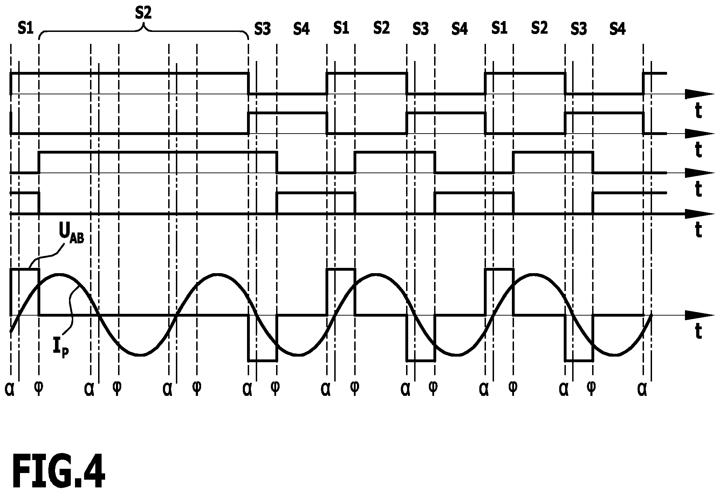

Der Übergang aus dem zweiten Steuermodus zurück in den ersten Steuermodus ist in Figur 4 anhand eines Schaltschemas der Schaltelemente A1, A2, B1 und B2 dargestellt. Der Übergang erfolgt nach Ablauf einer Freilaufphase, im dargestellten Ausführungsbeispiel nach Ablauf der ersten Freilaufphase S2. Die Schaltfrequenz wird dann wieder um den Faktor 3 erhöht.

## Patentansprüche

1. Verfahren zum Regeln einer Schweißstromquelle (10) mit einem Seriell/Parallel-Resonanzkonverter (29), einer Brückenschaltung (17) und einer Steuereinheit (21), wobei die Brückenschaltung (17) den Seriell/Parallel-Resonanzkonverter (29) mit Energie versorgt und einen ersten Brückenzweig (18) mit in Reihe zueinander angeordneten ersten und zweiten Schaltelementen (A1, A2) sowie einen parallel zum ersten Brückenzweig (18) geschalteten zweiten Brückenzweig (19) mit in Reihe zueinander angeordneten dritten und vierten Schaltelementen (B1, B2) aufweist und die Schaltelemente von der Steuereinheit (21) entsprechend einer in der Steuereinheit hinterlegten Aufeinanderfolge von Schaltzuständen gesteuert werden, die durch eine positive Treibphase (S1), eine erste Freilaufphase (S2), eine negative Treibphase (S3) und eine zweite Freilaufphase (S4) festgelegt sind, wobei der Beginn einer Treibphase durch ein Umschalten der ersten und zweiten Schaltelemente (A1, A2) und das Ende einer Treibphase durch ein phasenverschobenes Umschalten der dritten und vierten Schaltelemente (B1, B2) vorgegeben ist und die Schaltfrequenz der Schaltelemente in einem ersten Steuermodus der Steuereinheit (21) abhängig von der Frequenz des Resonanzkonverterstroms gewählt wird, **dadurch gekennzeichnet, dass** die Schaltfrequenz der Schaltelemente in einem zweiten Steuermodus der Steuereinheit (21) verglichen mit der Schaltfrequenz des ersten Steuermodus um einen ganzzahligen Faktor reduziert wird und die Steuereinheit (21) wahlweise im ersten Steuermodus oder im zweiten Steuermodus betrieben wird.

2. Verfahren nach Anspruch 1, **dadurch gekennzeichnet, dass** die Steuereinheit (21) den Steuermodus in Abhängigkeit von der Größe eines vorgebbaren Sollwerts des Ausgangsstroms der Schweißstromquelle (10) wählt.

3. Verfahren nach Anspruch 1 oder 2, **dadurch gekennzeichnet, dass** die Steuereinheit (21) in den zweiten Steuermodus übergeht, wenn der Sollwert des Ausgangsstroms einen vorgegebenen oder vorgebbaren Grenzwert unterschreitet.

4. Verfahren nach Anspruch 1, 2 oder 3, **dadurch gekennzeichnet, dass** die Schaltfrequenz der Schaltelemente im zweiten Steuermodus der Steuereinheit (21) um einen ungeradzahligen Faktor reduziert wird.

5. Verfahren nach einem der voranstehenden Ansprüche, **dadurch gekennzeichnet, dass** die Schaltfrequenz der Schaltelemente im zweiten Steuermodus der Steuereinheit (21) um den Faktor 3, 5 oder 7 reduziert wird.

6. Verfahren nach einem der voranstehenden Ansprüche, **dadurch gekennzeichnet, dass** die Steuereinheit (21) eine Freilaufphase (S2) nach Ablauf einer vorgegebenen oder vorgebbaren maximalen Zeitdauer durch Übergang in die gemäß der vorgegebenen Aufeinanderfolge von Schaltzuständen der Freilaufphase (S2) nachfolgende Treibphase (S3) beendet.

7. Verfahren nach einem der voranstehenden Ansprüche, **dadurch gekennzeichnet, dass** der Steuereinheit (21) eine minimale Schaltfrequenz der Schaltelemente vorgegeben wird.

8. Verfahren nach einem der voranstehenden Ansprüche, **dadurch gekennzeichnet, dass** ein Übergang vom ersten Steuermodus in den zweiten Steuermodus nach Ablauf einer Treibphase (S1, S3) erfolgt.

9. Verfahren nach einem der voranstehenden Ansprüche, **dadurch gekennzeichnet, dass** ein Übergang vom zweiten Steuermodus in den ersten Steuermodus nach Ablauf einer Freilaufphase (S2) erfolgt.

## Claims

1. Method for control of a welding current source (10) with a serial/parallel resonant converter (29), a bridge circuit (17) and a control unit (21), the bridge circuit (17) supplying the serial/parallel resonant converter (29) with power and comprising a first bridge branch (18) with first and second switching elements (A1, A2) arranged in series with one another and a second bridge branch (19) connected in parallel to the first bridge branch (18) and with third and fourth switching elements (B1, B2) arranged in series with one another and the switching elements being controlled by the control unit (21) in accordance with a succession of switching states stored in the control unit which are determined by a positive drive phase (S1), a first freewheel phase (S2), a negative drive phase (S3) and a second freewheel phase (S4), the start of a drive phase being defined by a switchover of the first and second switching elements (A1, A2) and the end of a drive phase being defined by a phase-shifted switchover of the third and fourth switching elements (B1, B2) and, in a first control mode of the control unit (21), the switching frequency of the switching elements being selected in dependence on the frequency of the resonant converter current, **characterised in that**, in a second control mode of the control unit (21), the switching frequency of the switching elements is reduced by an integral factor compared with the switching frequency of the first control mode, and the control unit (21) is selectively operated in the first control mode or in the second control mode.

2. Method in accordance with Claim 1, **characterised in that** the control unit (21) selects the control mode in dependence on the magnitude of a definable output current setpoint of the welding current source (10).

3. Method in accordance with Claim 1 or 2, **characterised in that** the control unit (21) changes over into the second control mode when the output current setpoint falls below a defined or definable limit value.

4. Method in accordance with Claim 1, 2 or 3, **characterised in that**, in the second control mode of the control unit (21), the switching frequency of the switching elements is reduced by an odd factor.

5. Method in accordance with any one of the preceding Claims, **characterised in that**, in the second control mode of control unit (21), the switching frequency of the switching elements is reduced by a factor of 3, 5 or 7.

6. Method in accordance with any one of the preceding Claims, **characterised in that** the control unit (21) terminates a freewheel phase (S2) once a defined or definable maximum period has elapsed by changing over into the drive phase (S3) which follows the freewheel phase (S2) according to the defined succession of switching states.

7. Method in accordance with any one of the preceding Claims, **characterised in that** a minimum switching frequency of the switching elements is defined for the control unit (21).

8. Method in accordance with any one of the preceding Claims, **characterised in that** a changeover from the first control mode into the second control mode takes place at the end of a drive phase (S1, S3).

9. Method in accordance with any one of the preceding Claims, **characterised in that** a changeover from the second control mode into the first control mode takes place at the end of a freewheel phase (S2).

## Revendications

1. Procédé de régulation d'une source de courant de soudage (10) au moyen d'un convertisseur résonant série/parallèle (29), d'un montage en pont (17) et d'une unité de commande (21), dans lequel le montage en pont (17) alimente le convertisseur résonant série/parallèle (29) en énergie et présente une première branche de pont (18) pourvue de premier et deuxième éléments de commutation (A1, A2) agencés en série les uns par rapport aux autres ainsi qu'une deuxième branche de pont (19) montée en parallèle par rapport à la première branche de pont (18) et pourvue de troisième et quatrième éléments de commutation (B1, B2) agencés en série les uns par rapport aux autres et les éléments de commutation sont commandés par l'unité de commande (21) selon une succession d'états de commutation mis en mémoire dans l'unité de commande, lesquels sont fixés par une phase d'attaque positive (S1), une première phase de roue libre (S2), une phase d'attaque négative (S3) et une deuxième phase de roue libre (S4), dans lequel le début d'une phase d'attaque est prédéfini par une commutation des premier et deuxième éléments de commutation (A1, A2) et la fin d'une phase d'attaque est prédéfinie par une commutation déphasée des troisième et quatrième éléments de commutation (B1, B2) et la fréquence de commutation des éléments de commutation dans un premier mode de commande de l'unité de commande (21) est sélectionnée en fonction de la fréquence du courant du convertisseur résonant, **caractérisé en ce que** la fréquence de commutation des éléments de commutation dans un deuxième mode de commande de l'unité de commande (21) est réduite d'un facteur entier en comparaison de la fréquence de commutation du premier mode de commande et l'unité de commande (21) fonctionne sélectivement dans le premier mode de commande ou dans le deuxième mode de commande.

2. Procédé selon la revendication 1, **caractérisé en ce que** l'unité de commande (21) sélectionne le mode de commande en fonction de la grandeur d'une valeur théorique pouvant être prédéfinie du courant de sortie de la source de courant de soudage (10).

3. Procédé selon la revendication 1 ou 2, **caractérisé en ce que** l'unité de commande (21) passe dans le deuxième mode de commande lorsque la valeur théorique du courant de sortie passe au-dessous d'une valeur limite prédéfinie ou pouvant être prédéfinie.

4. Procédé selon la revendication 1, 2 ou 3, **caractérisé en ce que** la fréquence de commutation des éléments de commutation dans le deuxième mode de commande de l'unité de commande (21) est réduite d'un facteur impair.

5. Procédé selon l'une quelconque des revendications précédentes, **caractérisé en ce que** la fréquence de commutation des éléments de commutation dans le deuxième mode de commande de l'unité de commande (21) est réduite du facteur 3, 5 ou 7.

6. Procédé selon l'une quelconque des revendications précédentes, **caractérisé en ce que** l'unité de commande (21) met fin à une phase de roue libre (S2) après expiration d'une durée maximale prédéfinie ou pouvant être prédéfinie par un passage dans la phase d'attaque (S3) succédant à la phase de roue libre (S2) conformément à la succession prédéfinie d'états de commutation.

7. Procédé selon l'une quelconque des revendications précédentes, **caractérisé en ce qu'**une fréquence de commutation minimale des éléments de commutation est spécifiée à l'unité de commande (21).

8. Procédé selon l'une quelconque des revendications précédentes, **caractérisé en ce qu'**un passage du premier mode de commande dans le deuxième mode de commande s'effectue au terme d'une phase d'attaque (S1, S3).

9. Procédé selon l'une quelconque des revendications précédentes, **caractérisé en ce qu'**un passage du deuxième mode de commande dans le premier mode de commande s'effectue au terme d'une phase de roue libre (S2).
